# FASCICULE DE BREVET EUROPEEN

(11) **EP 2 428 497 B1**
(45) Date de publication et mention de la délivrance du brevet: **09.03.2016**
(21) Numéro de dépôt: 11180975.2
(22) Date de dépôt: 12.09.2011
(51) Int. Cl.: C03C 17/00, C03C 17/30, B65D 23/08, A61J 9/00

(54) **PROCÉDÉ DE FABRICATION D'UN RÉCIPIENT EN VERRE**
HERSTELLUNGSVERFAHREN FÜR GLASBEHÄLTER
MANUFACTURING PROCESS FOR GLASS CONTAINER

(30) Priorité: 13.09.2010 FR 1057290
(43) Date de publication de la demande: 14.03.2012
(73) Titulaire: SGD S.A., 92800 Puteaux (FR)
(72) Inventeur: Perrot, Carine, 76260 Etalondes (FR)
(74) Mandataire: Martin, Didier Roland Valéry

(56) Documents cités:
- WO-A2-2011/006089
- GB-A- 1 478 484
- US-A- 1 589 138
- US-A- 4 225 049
- US-A- 4 860 906
- US-A- 5 034 061
- US-A1- 2009 057 257
- DATABASE WPI Week 200645 Thomson Scientific, London, GB; AN 2006-438108 XP002638041, -& JP 2006 159819 A (SHINETSU CHEM CO LTD) 22 juin 2006 (2006-06-22)
- "RHODORSIL® RTV 141 A and B", , décembre 1996 (1996-12), XP007918411, Extrait de l'Internet: URL:http://www.bentleychemicals.co.uk/file s/RTV141_1.pdf [extrait le 2011-04-26]
- "Safety Data Sheets: RHODORSIL RTV 141 A and B", , 5 juin 1997 (1997-06-05), XP007918412, Extrait de l'Internet: URL:http://www.bentleychemicals.co.uk/file s/RTV_141AandB.pdf [extrait le 2011-04-26]

## Description

La présente invention se rapporte au domaine général des récipients pourvus d'une surface en verre utilisables dans différents secteurs industriels, et en particulier pour le conditionnement en verre, par exemple dans les domaines cosmétique, pharmaceutique ou alimentaire.

L'invention concerne par ailleurs le domaine technique du traitement des récipients en verre, dans un but fonctionnel et/ou décoratif, notamment le traitement des récipients destinés à recevoir un contenu alimentaire.

La demande décrit plus précisément un récipient conçu pour contenir au moins un produit destiné à l'alimentation humaine ou animale, ledit récipient comprenant une paroi en verre composée d'une face interne conçue pour être en contact avec ledit au moins un produit et d'une face externe qui lui est opposée.

L'invention concerne également un procédé de fabrication, et plus particulièrement de revêtement, d'un récipient en verre destiné par exemple au conditionnement cosmétique, pharmaceutique ou alimentaire.

Elle concerne en particulier un procédé de fabrication, et plus particulièrement de revêtement, d'un récipient conçu pour contenir au moins un produit destiné à l'alimentation humaine ou animale, ledit récipient comprenant une paroi en verre composée d'une face interne conçue pour être en contact avec ledit au moins un produit et d'une face externe qui lui est opposée.

On utilise couramment et de manière assez répandue dans le monde des biberons fabriqués en matière plastique pour nourrir les bébés, les nourrissons et les enfants en bas âge. Ces biberons, le plus souvent remplis par un liquide comme du lait, présentent le principal intérêt d'être incassables et de présenter une bonne résistance mécanique en cas de chute ou de choc, contrairement aux biberons en verre précédemment utilisés.

En outre, ces biberons sont particulièrement légers, résistent aux variations de températures, notamment lors de leur lavage (lave-vaisselle) et de leur désinfection (stérilisation). Ils sont par ailleurs conçus avec des dimensions, des formes et des modèles très variés, qui les rendent particulièrement pratiques et esthétiques. Il existe également des biberons dont la forme ergonomique facilite leur manipulation par le parent ou leur tenue dans les mains de l'enfant.

Toutefois, alors même qu'ils offrent des atouts non négligeables, ces biberons en matière plastique n'en présentent pas moins certains inconvénients.

En effet, la plus grande majorité des biberons en plastique contiennent du bisphénol A (BPA), un composé chimique largement utilisé dans la fabrication des plastiques comme le polycarbonate qui entre dans la composition des biberons alimentaires et des bonbonnes d'eau. Le BPA, qui s'avère très utile et difficilement remplaçable, est également utilisé pour la fabrication de nombreux PVC et revêtements intérieurs des boîtes de conserve et des cannettes métalliques de sodas.

Cependant, il a été démontré que le BPA pourrait être un composé particulièrement toxique, notamment qu'il pourrait avoir des conséquences en terme de reproduction de l'homme, en cas d'ingestion répétées chez l'enfant. Le BPA a en effet tendance à être relargué spontanément dans le lait du nourrisson lors de l'utilisation du biberon, en particulier après que ce dernier a été lavé à haute température ou avec des détergents puissants. Une contamination par le BPA peut également se faire par inhalation ou par contact avec la peau.

Compte-tenu des effets négatifs du BPA et de sa récente interdiction dans la fabrication des biberons pour bébés dans certains pays, on a désormais de plus en plus souvent recours aux biberons en verre pour l'alimentation des bébés. Ces biberons en verre présentent une parfaite innocuité et l'intérêt de ne pas contenir de BPA. Le verre présente également l'avantage de ne contenir aucun phtalate et d'être recyclable à 100 %. Les biberons en verre sont en outre faciles d'entretien dans la mesure où ils résistent en général aux chocs thermiques induits notamment par le lavage au lave-vaisselle et la stérilisation.

Toutefois, ces biberons en verre présentent certains inconvénients qui peuvent parfois limiter leur utilisation.

En effet, les biberons en verre sont fragiles en cas de chocs ou de chutes et ils peuvent donc assez facilement être cassés. La casse du biberon en verre est particulièrement dangereuse dans la mesure où elle crée un grand nombre de débris tranchants de toute taille susceptibles de provoquer des coupures ou de graves conséquences en cas d'ingestion par un enfant.

On connaît par ailleurs du document US-4,860,906 un récipient à café en verre revêtu d'un revêtement protecteur en silicone.

Les objets assignés à l'invention visent en conséquence à porter remède aux inconvénients exposés dans ce qui précède. La demande décrit un récipient qui présente une bonne résistance mécanique, en particulier qui soit résistant à la casse, et qui soit particulièrement sûr en terme de toxicité et d'innocuité.

La demande décrit un récipient qui soit particulièrement résistant et stable, en particulier chimiquement, quelles que soient ses conditions d'usage, notamment en cas de chocs thermiques ou mécaniques, ou en cas de modification des conditions hygrométriques ou en présence d'eau liquide.

La demande décrit un récipient qui présente des caractéristiques esthétiques particulièrement attirantes pour l'utilisateur.

La demande décrit un récipient qui comprenne des constituants sûrs, résistants aux contraintes d'utilisation, facilement disponibles et non toxiques.

La demande décrit un récipient qui puisse être utilisé pour l'alimentation des nourrissons.

Un autre objet de l'invention vise à proposer un nouveau procédé de fabrication d'un récipient qui comprend des étapes contrôlées et maîtrisées, de manière à obtenir un récipient qui soit résistant à la casse et particulièrement sûr en terme de toxicité et d'innocuité.

Un autre objet de l'invention vise à proposer un nouveau procédé de fabrication d'un récipient qui comprend des étapes sûres qui permettent d'obtenir des propriétés reproductibles.

Les objets assignés à l'invention sont atteints à l'aide d'un procédé conforme à l'objet de la revendication 1.

D'autres objets et avantages de l'invention apparaîtront mieux à la lecture de la description qui suit, ainsi qu'à l'aide des dessins annexés et des exemples de réalisation, donnés à titre purement illustratif et non limitatif, dans lesquels :
- La figure 1 illustre, selon une vue schématique de face, un récipient conforme à l'invention, constitué en l'espèce par un biberon destiné à être rempli de lait infantile.
- La figure 2 représente, sous forme d'un graphique, l'évolution de la viscosité du silicone utilisé pour le revêtement du récipient de l'invention en fonction de la température.
- La figure 3 représente, sous forme d'un graphique, l'évolution du « *pot life* » (durée de vie en pot) du silicone utilisé pour le revêtement du récipient de l'invention, en fonction du temps, à une température de 10°C.
- La figure 4 représente, sous forme d'un graphique, un profil de vitesse de sortie de bain de trempage pour le récipient.
- La figure 5 représente un modèle de représentation des couleurs développé par la Commission Internationale de l'Eclairage (CIE) en 1976.

La demande décrit un récipient 1 conçu pour contenir au moins un produit, de préférence un produit destiné à l'alimentation humaine ou animale, c'est-à-dire un contenant, de préférence alimentaire, de type boîte, flacon, bouteille ou autre. De préférence, le récipient 1 est fermé par un bouchon (non représenté), de manière à maintenir son contenu à l'intérieur du récipient 1, ledit contenu étant de préférence destiné à être avalé par un animal ou un homme.

Bien entendu, comme exposé plus haut, le récipient 1, de même que le procédé de fabrication correspondant, pourra également être adapté pour l'emballage d'autres produits, notamment des substances pharmaceutiques ou cosmétiques.

Ainsi, l'invention n'est en pratique nullement limitée à un mode de réalisation particulier, le procédé pouvant notamment être appliqué à la réalisation de nombreux types de récipients en verre (boîtes, flacons, bouteilles, voire ampoules à incandescence) pour lesquels des propriétés anti-casse sont recherchées, de tels récipients pouvant par exemple être adaptés pour contenir des produits de diverses formes (liquide, pâte, gel, crème, granulat, paillettes, voire mélange gazeux, etc.) et de nature chimique variée, tels que, en particulier, des substances ou compositions pharmaceutiques, cosmétiques, détergentes, etc.

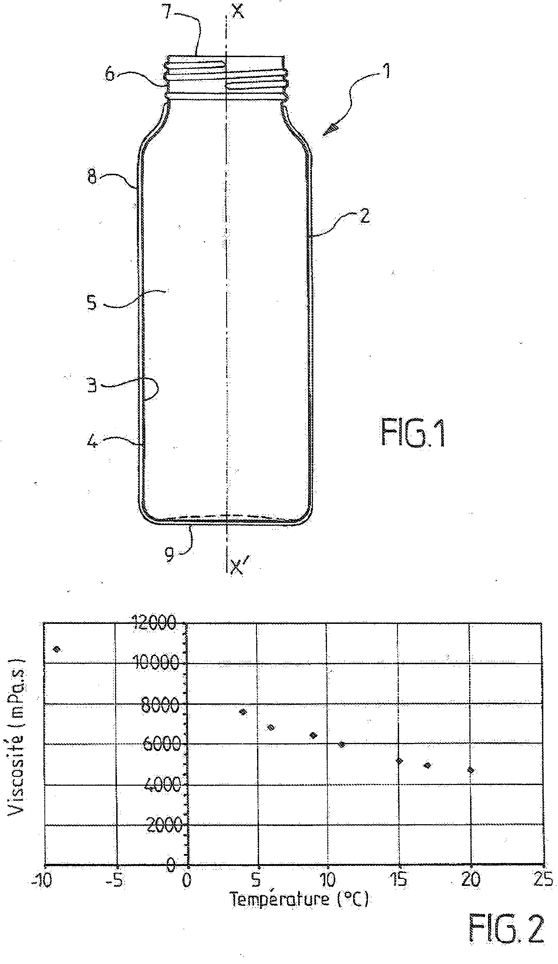

Le récipient 1 comprend une paroi 2 en verre composée d'une face interne 3 conçue pour être en contact avec ledit au moins un produit et d'une face externe 4 qui lui est opposée, tel que cela est illustré à la figure 1. De manière avantageuse, le récipient 1 comprend un corps principal 5 qui repose par son fond 9 sur une surface et qui se resserre à son extrémité supérieure pour former un goulot 6 ou une bague 6, au niveau duquel (de laquelle) le produit est introduit et extrait du récipient 1 par une ouverture 7. De préférence, la paroi 2 du corps 5 et du goulot 6 est sensiblement intégralement réalisée en verre.

Dans un mode de réalisation particulièrement préféré, le récipient 1 constitue un biberon 1 en verre pour l'alimentation infantile dont le corps 5 et le goulot 6 sont représentés à la figure 1. Dans un simple souci de clarté et de concision, on s'attachera à décrire dans la suite de la description avantageusement ce mode de réalisation du récipient 1 sous forme d'un biberon 1, en relation avec un produit de type alimentaire, sans que cela ne constitue une limitation de l'invention.

Le biberon 1 est destiné à recevoir le produit sous forme liquide, par exemple du lait, de la soupe, de l'eau ou tout autre contenant liquide pouvant être administré à un nourrisson. Le biberon 1 comprend également une tétine et un bouchon (non représentés) destinés à permettre d'administrer le produit sensiblement liquide au nourrisson et de maintenir le biberon 1 fermé.

De préférence, ladite paroi 2 en verre comprend un verre conçu pour résister à des variations brutales de températures, lesdites températures étant susceptibles de varier entre sensiblement - 20°C et 10°C, de préférence entre sensiblement - 10°C et 95°C. Le verre de la paroi 2 est donc de nature à supporter d'importantes variations de températures, par exemple lors du chauffage du biberon 1 dans un four à micro-onde ou dans un bain-marie, lors de son nettoyage dans un lave-vaisselle ou lors de sa désinfection par stérilisation. En particulier, le verre de la paroi 2 est avantageusement traité à chaud à l'oxyde d'étain, ce qui lui confère une résistance particulièrement élevée aux chocs thermiques.

En outre, ladite paroi 2 en verre du biberon 1 comprend préférentiellement un verre neutre dans sa masse et apte au contact alimentaire. En d'autres termes, le verre utilisé pour la fabrication du biberon 1 est un verre de type borosilicate particulièrement solide et qui répond avantageusement aux exigences du conditionnement des produits cosmétiques et pharmaceutiques. Il s'agit d'un verre qui n'a aucune influence sur le pH et sur la nature chimique du produit contenu dans le biberon 1, c'est-à-dire qu'il ne relargue aucun de ses constituants et ne réagit pas avec le produit.

Afin de répondre au mieux à ces différentes exigences, en particulier en termes de résistance thermique, la paroi 2 en verre du biberon 1 comprend avantageusement du pyrex ou un verre de type I.

Ce verre borosilicate de type 1 ou de type pyrex présente également un bas taux d'alumine et une neutralité améliorée. Le verre utilisé pour la fabrication du biberon 1 est donc particulièrement solide, résistant, stable et neutre. Il est en outre non toxique et sûr d'un point de vue sanitaire et sécuritaire.

Par ailleurs, le verre pour le biberon 1 peut avantageusement être décoré ou porter des indications utiles pour son utilisation, par exemple une graduation pour indiquer la contenance du biberon 1. Toute sorte de décors ou autre classiquement présents, à titre esthétique et/ou informatif, sur le biberon 1, en particulier sur sa face externe 4, peut avantageusement être ajoutée à ladite paroi 2 en verre.

Au moins une fraction de ladite face externe 4 dudit récipient 1 est recouverte par un revêtement 8 obtenu par un procédé de trempage, ledit revêtement 8 comprenant au moins un silicone et étant destiné à conférer à ladite paroi en verre des propriétés de résistance à la casse.

En d'autres termes, la face externe 4 du biberon 1 est entourée d'un revêtement 8 protecteur formant enveloppe de protection contre les chocs ou les chutes éventuel(le)s que pourrait accidentellement subir le biberon 1, de manière à réduire les risques de voir le biberon 1 se fracturer ou se casser en morceaux. De préférence, ce revêtement 8 à base de silicone est en outre destiné à maintenir d'éventuels bouts de verre dans le biberon 1, au cas où des chocs répétés venaient à briser tout de même la paroi en verre 2. En effet, le revêtement 8 forme une couche protectrice qui joue avantageusement un rôle de retenue d'éventuels morceaux de verre en cas de casse du biberon 1, de manière à éviter les risques d'éclats de verre sur le sol ou les risques de coupures accidentelles.

De préférence, ledit revêtement 8 recouvre sensiblement toute la face externe 4 dudit récipient 1. Le revêtement 8 est préférentiellement retenu de manière fixe et stable sur la face externe 4, sensiblement en tout point de cette dernière, de telle sorte qu'il fait partie intégrante de la paroi en verre 2 et qu'on ne puisse pas le détacher facilement de cette dernière. En effet, de manière avantageuse, le revêtement 8 à base de silicone adhère à la paroi 2 du biberon, sans espace entre cette dernière et ledit revêtement 8, de telle sorte qu'aucune saleté ou aucun micro-organisme ne puisse s'introduire et éventuellement se développer entre la paroi 2 et le revêtement 8. Une telle application du revêtement 8 en silicone contre la paroi 2 garantit ainsi la fiabilité du revêtement dans le temps, son innocuité et sa sécurité sanitaire.

Ce revêtement 8 est obtenu par trempage ou plongeon du biberon 1 dans un fluide, c'est-à-dire par immersion du biberon 1 dans un bain sensiblement liquide comprenant les constituants du revêtement 8 et notamment le silicone, afin que le silicone soit en contact avec toute la face externe 4 du biberon et qu'il puisse former un revêtement homogène et d'un seul tenant sur la face externe 4 du biberon 1.

Le silicone est choisi de manière à garantir résistance, innocuité, contact alimentaire et sécurité au biberons 1.

De manière avantageuse, le revêtement 8 est conçu pour résister à des températures susceptibles de varier entre sensiblement - 20°C, et 100°C, de préférence entre sensiblement - 10°C et 95°C. Le revêtement 8 est préférentiellement conçu pour résister à des variations brutales et irrégulières de températures. De préférence, il présente sensiblement les mêmes caractéristiques de résistance aux variations de températures que le verre du biberon 1, notamment lorsque des températures élevées sont appliquées pour chauffeur ou réchauffer le biberon 1 (four à micro-ondes, bain-marie, chauffe-biberons ...), pour stériliser ce dernier ou le nettoyer dans un lave-vaisselle. En outre, ce revêtement 8, tout comme le verre du biberon 1, supporte aisément des températures particulièrement froides, par exemple lors du stockage du biberon 1 dans un réfrigérateur.

Dans un mode de réalisation préféré, ledit revêtement 8 présente une épaisseur sensiblement comprise entre 0,1 et 5 mm, de préférence sensiblement comprise entre 0,4 et 2 mm, avantageusement sensiblement égale à 1 mm. Une telle épaisseur est suffisante pour conférer au biberon 1 ses propriétés anti-casse.

De manière avantageuse, ledit revêtement 8 est sensiblement transparent, c'est-à-dire qu'il laisse passer la lumière et que l'on distingue le contenu du biberon 1 à travers le revêtement 8. De préférence, le revêtement 8 n'a pas de teinte particulière et est sensiblement incolore. Toutefois, il est parfaitement envisageable, sans sortir du cadre de la présente invention, que le revêtement 8 présente une couleur particulière tout en conservant ses propriétés de transparence. Il est par ailleurs également envisageable que le revêtement soit translucide avec ou non une coloration associée, de manière à permettre de seulement distinguer le niveau du contenu du biberon 1.

Dans un mode de réalisation préféré, ledit revêtement 8 est sensiblement non collant au toucher, c'est-à-dire qu'il présente un toucher agréable sensiblement lisse et sec.

Le silicone est préférentiellement le constituant majoritaire du revêtement 8, voire l'unique composant de ce dernier. C'est donc le silicone qui confère les propriétés de résistance thermique, de transparence, d'adhérence au verre, de stabilité, d'aspect esthétique et de toucher non collant au revêtement 8.

En outre, le revêtement 8 est parfaitement stable chimiquement, quelle que soit son utilisation, par exemple il ne relargue aucun de ses constituants, ne se détériore pas au contact de l'eau, de la vapeur d'eau ou par contact répétitif avec certaines surfaces (tables, plans de travail ...) ou avec les mains de l'utilisateur. Le revêtement 8 comprend donc préférentiellement des composants qui lui confèrent une résistance mécanique, chimique et thermique, particulièrement élevée.

Le revêtement 8 comprend avantageusement un élastomère silicone qui présente les caractéristiques décrites ci-avant, en particulier une viscosité optimale, des propriétés mécaniques suffisantes, une transparence compatible avec son utilisation, une facilite à être mis en oeuvre et un agrément pour le contact alimentaire.

Afin de répondre au mieux à ces différents critères, on choisit un silicone RTV (Room Temperature Vulcanisation) bi-composant qui réagit à température ambiante et dont les composants ne réagissent qu'après mise en contact. Ainsi, un silicone RTV bi-composant s'avère plus facile à mettre en oeuvre qu'un élastomère silicone RTV mono-composant dont la vulcanisation est activée par l'humidité de l'air.

En raison des contraintes en termes de viscosité et de « *pot life* » (durée de vie en pot) pour réaliser un bain de trempage du biberon 1 et pour toutes les propriétés requises telles que susvisées, le silicone choisi pour le revêtement 8 est le RHODORSIL RTV 141®, commercialisé par la société Bluestar Silicones.

Ce silicone particulier (RHODORSIL RTV 141®) permet avantageusement d'obtenir toutes les caractéristiques du revêtement 8 du biberon 1 de l'invention, de telle sorte que ce dernier présente des propriétés mécaniques, notamment anti-casse, améliorées et largement supérieures à celles d'un biberon classique en verre sans revêtement. En outre, la combinaison du type de verre particulier susvisé pour la paroi 2 en verre du biberon 1 avec le revêtement 8 à base de silicone présente l'intérêt de permettre l'obtention d'un biberon 1 en verre particulièrement stable et résistant, mécaniquement et chimiquement. Le biberon 1 recouvert par le revêtement 8 est par exemple résistant à de forts taux d'humidité (lave-vaisselle), à de nombreux chocs, tels que par exemple des coups et des chutes, à des chocs thermiques, cette liste n'étant pas exhaustive.

Le biberon 1 est également sûr en termes d'innocuité et de toxicité, et son revêtement 8 est stable et reste en position sur le biberon 1 quelle que soit son utilisation en tant que contenant alimentaire. De préférence le revêtement 8 à base de silicone résiste à la stérilisation chimique à froid, à l'eau bouillante, au lave-vaisselle au micro-onde ainsi qu'à une stérilisation à l'autoclave (30 minutes sous pression à 121°C), qui pourrait s'apparenter à une stérilisation en cocotte-minute.

Il est également parfaitement envisageable, sans sortir du cadre de la présente invention, d'utiliser un autre type de silicone qui présente les propriétés requises, par exemple un élastomère silicone LSR (Liquid Silicone Rubber) ou un élastomère vulcanisable à chaud.

La présente invention concerne également un procédé de fabrication d'un récipient 1 conçu pour contenir au moins un produit, ledit produit étant de préférence destiné à l'alimentation humaine ou animale. Ledit récipient 1 comprend une paroi 2 en verre composée d'une face interne 3 conçue pour être en contact avec ledit au moins un produit et d'une face externe 4 qui lui est opposée.

De manière avantageuse, ce récipient 1 est sensiblement identique à celui précédemment décrit. D'ailleurs, le procédé constitue préférentiellement un procédé de fabrication d'un biberon 1 pour l'alimentation infantile.

Ce procédé comprend de préférence une première étape de fourniture ou de réalisation dudit récipient 1, lequel comprend un corps 5 avantageusement fabriqué en verre. Le verre du récipient 1 présente préférentiellement les caractéristiques précédemment décrites, notamment en termes de résistance thermique et mécanique. L'étape de réalisation du récipient 1 comprend avantageusement une sous-étape de traitement du verre à chaud à l'oxyde métallique qui consiste à appliquer une couche d'oxyde métallique destinée à durcir la face externe 4 du récipient 1. Cette étape est de préférence suivie d'un traitement à froid qui consiste à appliquer une couche lubrifiante, afin notamment de protéger le récipient pendant son transport, et d'éviter l'apparition de rayures ou d'amorces de rupture lors de la manipulation du récipient par exemple jusqu'aux postes de préchauffage et/ou de trempage.

Postérieurement à cette étape de fourniture, le procédé de l'invention comprend une étape de recouvrement d'au moins une fraction de ladite face externe 4 par un revêtement 8 comprenant au moins un silicone et étant destiné à conférer à ladite paroi 2 en verre des propriétés de résistance à la casse. Cette étape de recouvrement comprend une étape de trempage, au cours de laquelle le récipient 1 est introduit et immergé dans un bain de trempage contenant le silicone.

De préférence, l'étape de trempage comprend une étape de préparation du bain de trempage à base dudit silicone, au cours de laquelle on forme un bain sensiblement liquide à partir d'un silicone bi-composant présentant une viscosité et une durée de vie en pot (*pot life*) compatibles avec le recouvrement de la face externe 4 en verre. En d'autres termes, le silicone est choisi pour ses propriétés d'écoulement, de manière à faciliter le recouvrement de la face externe 4 du biberon 1 par ce dernier.

L'étape de préparation du bain de silicone consiste avantageusement à mélanger, par exemple dans un bac de trempage prévu à cet effet, un premier mélange (partie A) à base de polyméthylvinylsiloxane et contenant au moins un catalyseur, par exemple un dérivé de platine, et un deuxième mélange (partie B) à base de polyméthylvinylsiloxanes et polyméthylhydrogénosiloxanes. De préférence, ces composants sont obtenus à l'aide d'un silicone particulier, par exemple le silicone RHODORSIL RTV 141® commercialisé par la société Bluestar Silicones.

Le premier et le deuxième mélanges présentent une viscosité respectivement de 3500 et 650 mPa.s à 25°C, tandis que le bain de silicone obtenu à partir de ces mélanges présente une viscosité de l'ordre de 4000 mPa.s à 25°C et une durée de vie en pot (« *pot life* ») de sensiblement 4h à cette même température. De manière avantageuse, une telle viscosité du bain de silicone garantit un recouvrement efficace, homogène et régulier de la face externe 4 du biberon 1.

De manière avantageuse, le RHODORSIL RTV 141® vulcanisé présente une dureté Shore A de 50, une résistance à la traction de 6 MPa et une élongation à rupture de 120 %. Le « *pot life* » peut avantageusement être augmenté par une diminution de la température du bain qui aura également pour conséquence une augmentation de la viscosité initiale du silicone. Il faut donc trouver un compromis entre ces deux paramètres.

En particulier, l'évolution de la viscosité du RHODORSIL RTV 141® pour des températures allant de -9°C à 20°C est exprimée dans le tableau ci-dessous ainsi qu'à la figure 2 qui représente graphiquement les valeurs du tableau suivant :

| **Température du premier mélange en °C** | **Viscosité Brookfield (3/5), en mPa.s** |
|---|---|
| -9 | 10720 |
| 4 | 7620 |
| 6 | 6850 |
| 9 | 6480 |
| 11 | 6000 |
| 15 | 5180 |
| 17 | 4980 |
| 20 | 4680 |

Ainsi, on s'aperçoit que la viscosité du silicone RHODORSIL RTV 141® augmente de manière sensiblement homogène lorsque la température diminue. On note également que l'augmentation de la viscosité est toutefois modérée dans une gamme de températures variant entre 10 à 20°C. If est donc préférable de maintenir le bain de silicone dans cette gamme de températures, de manière à ce que sa viscosité conserve le plus longtemps possible une valeur optimale pour le recouvrement dudit biberon 1.

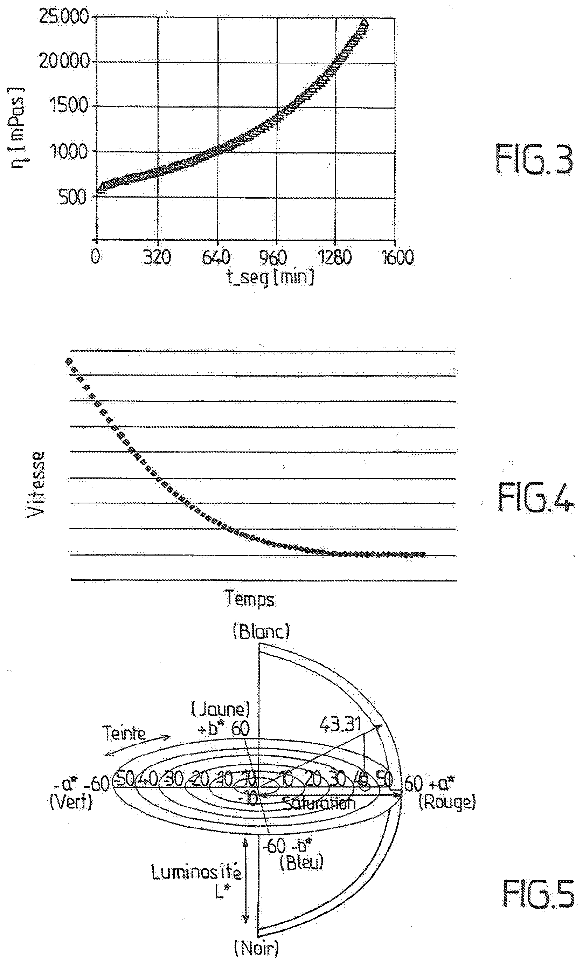

Dans un mode de réalisation préférentiel, une régulation de la température du bain de trempage aux alentours de 10°C n'augmente que modérément la viscosité initiale du silicone, qui passe de 4000 mPa.s à environ 6000 mPa.s, mais permet avantageusement d'augmenter de façon significative le « *pot life* » à une dizaine d'heures, comme le montre la figure 3, alors qu'il n'est que de 4h à la température ambiante.

En choisissant convenablement la température de régulation du bain de trempage, on peut ainsi avantageusement trouver un compromis entre d'une part une température minimale admissible, qui doit être suffisante pour garantir que la viscosité initiale du mélange est suffisamment faible pour être compatible avec le revêtement par trempage du récipient 1, et d'autre part une température maximale admissible qui doit être suffisamment basse pour ralentir la réticulation du bain consécutive au mélange, et par conséquent ralentir l'augmentation progressive de la viscosité dans le temps, de sorte à pouvoir conserver le plus longtemps possible un bain utilisable. Si l'on descend sous la température minimale, on risque de "geler" le mélange initial, tandis que si on laisse le bain se réchauffer au-delà de la température maximale, on accélère la réticulation en réduisant le « *pot life* »*.*

De préférence, les premier et deuxième mélanges du RHODORSIL RTV 141® sont incorporés dans les proportions recommandées par le fournisseur, en général la proportion du mélange comprend 10 parts du deuxième mélange pour 100 parts du premier mélange.

Il est également tout à fait envisageable, sans sortir du cadre de la présente invention, qu'un autre type de silicone soit utilisé pour obtenir les propriétés requises du revêtement 8. En outre, il est possible qu'un mode de réalisation particulier du bain de trempage à base de silicone comprenne l'ajout d'autres composants, par exemple des colorants ou des additifs odorants, en vue d'apporter des qualités esthétiques variées audit biberon 1. Il est également parfaitement envisageable de prévoir l'ajout d'inhibiteurs de réticulation pour augmenter le « *pot life* ».

En conjuguant réfrigération du bain et utilisation d'inhibiteur de réticulation, on peut avantageusement prolonger la durée de vie en pot pendant laquelle le bain reste exploitable, en portant par exemple ladite durée de vie au-delà de quatre heures, éventuellement jusqu'à huit heures voire douze heures.

Un dégazage sous vide du mélange est ensuite nécessaire, avant trempage, pour permettre l'élimination des bulles d'air introduites lors de l'homogénéisation du mélange. Cette étape s'accompagne d'une expansion du volume de silicone de 4 à 5 fois son volume initial.

Le bain de trempage est de préférence alimenté en continu par le mélange de manière à conserver une hauteur constante du silicone liquide. Il est de préférence régulé à basse température afin de ralentir la vulcanisation et donc l'augmentation de la viscosité. De préférence, la limite de trempage du biberon 1 se situe juste sous la bague ou le goulot 6, de manière à ce que le biberon 1 soit revêtu sur toute sa hauteur pour une efficacité maximale, notamment en termes de résistance mécanique. De manière avantageuse, la bague 6 n'est pas revêtue de silicone, afin de ne pas gêner la fixation de la tétine sur le biberon 1.

La vulcanisation du silicone intervient dès la mise en contact des premier et deuxième mélanges (parties A et B) du RHODORSIL RTV 141®. Le silicone vulcanise de préférence à température ambiante par une réaction de polyaddition qui peut être largement accélérée par une augmentation de la température. Ainsi, la durée de vulcanisation totale est d'autant plus faible que la température est élevée.

Le temps nécessaire à la vulcanisation a été déterminé à 120°C, et 150°C, en mesurant l'évolution de la dureté Shore A en fonction du temps, tel que cela est présenté dans le tableau ci-dessous. Comme indiqué dans ce tableau, la vulcanisation du silicone est sensiblement totale après environ 20 minutes à 120°C, ou 5 minutes à 150°C. Il est nécessaire d'attendre la vulcanisation complète du silicone sur le verre, en contrôlant la durée et la température de cuisson, de manière à obtenir un silicone formant un réseau unitaire avec des propriétés mécaniques optimales.

En particulier les tableaux ci-dessous indiquent l'évolution de la vulcanisation en mesurant la dureté, exprimée en Shore A du silicone. La vulcanisation est totale lorsque la dureté n'évolue plus.

**Dureté en fonction du temps pour une vulcanisation à 120°C :**

| **Temps (mn)** | **Dureté (Shore A)** |
|---|---|
| 2 | NV¹ |
| 5 | 33 |
| 10 | 42 |
| 15 | 43 |
| 20 | 46 |
| 30 | 46 |

| | |
|---|---|
| *¹NV pour non vulcanisé* | |

**Dureté en fonction du temps pour une vulcanisation à 150°C :**

| **Temps à 150°C (mn)** | **Dureté (Shore A)** | **Temps à RT (heures)** | **Dureté (Shore A)** | **Résistance à la rupture (N/mm²)** |
|---|---|---|---|---|
| 2 | 37 | 15 | 37 | 0,62 |
| 5 | 45 | 15 | 45 | 6,87 |
| 10 | 45 | 15 | 47 | 6,36 |

Le revêtement réalisé à partir de RHODORSIL RTV 141 est parfaitement transparent. Il présente un aspect légèrement caoutchouteux mais ne colle avantageusement pas du tout au toucher. Cette propriété du revêtement 8 est liée à la dureté Shore A du bain de trempage. En effet, de manière avantageuse, plus la dureté Shore A est élevée, moins le toucher est collant.

De préférence, l'étape de trempage comprend une sous-étape de pénétration dudit récipient 1 dans le bain à base de silicone, au cours de laquelle le récipient 1, ici de préférence un biberon 1, est maintenu fixe en position sensiblement inclinée tandis que le bain de silicone est mis en mouvement de manière à recouvrir sensiblement toute la face externe 4 dudit récipient 1. Au cours de cette étape de pénétration, le biberon 1 est préférentiellement maintenu à l'aide une pince et son goulot 6 est dirigé vers le haut. Le biberon 1 est en position verticale légèrement incliné lors de la pénétration dans le bain, pour permettre un bon recouvrement du fond 9 et éviter les coulures. De préférence, le bain monte par l'intermédiaire d'un système mécanique, par exemple une came dont la forme doit être adaptée en fonction du récipient 1 et des caractéristiques du bain. De manière avantageuse, le biberon 1 est relevé en position sensiblement verticale, avant la fin du trempage, de préférence après que le fond 9 ait été recouvert par le bain de trempage.

Dans un mode de réalisation particulièrement avantageux, le procédé comprend, préalablement à l'étape de trempage, une étape de préchauffage dudit récipient 1, ici du biberon 1.

De préférence, au cours de ladite étape de préchauffage, on porte le verre du récipient 1, et plus particulièrement la paroi de verre 2, ou à tout le moins la ou les portions à revêtir de la face externe 4, à une température sensiblement comprise entre 200°C et 250°C, voire, de préférence, sensiblement comprise par exemple entre 200°C et 220°C.

Cette étape de préchauffage permet avantageusement de favoriser l'accroche du silicone sur la face externe 4 en verre du biberon 1 et d'éviter les coulures.

Bien entendu, la température appliquée au récipient 1 au cours de cette étape de préchauffage est susceptible de varier selon le mode de réalisation de la présente invention, par exemple en fonction du type de récipient 1 (taille, dimensions, type de verre ...), du nombre de récipients 1 à préchauffer, de la taille du four de préchauffage, etc., cette liste n'étant pas exhaustive.

A titre d'exemple, il est notamment envisageable d'appliquer une consigne de chauffe plus basse, lorsque l'on souhaite éviter d'endommager un décor préalablement réalisé sur le flacon, par exemple par sérigraphie, afin de porter le verre à revêtir à une température sensiblement comprise dans la plage "basse" de préchauffage, par exemple entre 200°C et 220°C.

Dans tous les cas, le préchauffage permet avantageusement de réaliser une immersion "à chaud", c'est-à-dire l'introduction du récipient en verre chaud (préalablement porté à une température de l'ordre de 200°C à 220°C, voire à 250°C), dans un bain "froid", préparé à base du silicone destiné au revêtement 8, qui est refroidi pour prolonger sa durée de vie.

Avantageusement, ledit bain de silicone constitue un bain "froid", dont la température est très inférieure, en l'espèce de plusieurs dizaines voire centaines de degrés Celsius, à celle du récipient 1 que l'on y plonge, et qui est de préférence refroidi et régulé de telle sorte que sa température moyenne est sensiblement maintenue en-dessous de 40°C, et de préférence en-dessous de 35°C, de 30°C, voire de 20°C, tout en étant de préférence supérieure ou égale à 10°C.

Ainsi, on pourra par exemple maintenir la température du bain sensiblement entre 10°C et 20°C, voire aux alentours de 10°C, tel que décrit plus haut, ou même, en pratique, s'approcher de cette plage en maintenant, avec une installation moins contraignante ou moins gourmande en énergie, la température du bain entre 15°C ou 20°C (valeur basse) et 30°C ou 35°C (valeur haute).

Avantageusement, le gradient thermique ainsi créé entre le verre à revêtir et le silicone qui vient à son contact permet en quelque sorte de "saisir" le silicone sur la surface chaude du récipient, et plus particulièrement sur la face externe 4, en favorisant la réticulation locale d'une sorte de sous-couche régulière, et ainsi la formation plus globale d'une couche présentant une meilleure homogénéité, et une bonne régularité dans son épaisseur, sans effet de coulure.

A ce titre, le biberon 1 est préférentiellement préchauffé avant trempage à une température permettant de réaliser un revêtement 8 suffisamment épais pour obtenir une rétention efficace des éclats de verre, dans le cas où des chocs répétés, thermiques, mécaniques ou autres, appliqués au biberon 1 entraîneraient la casse de sa paroi 4 en verre. En outre, cette étape de préchauffage de la paroi 4 en verre permet également avantageusement de limiter les risques de coulures sur la face externe 4 du biberon 1.

Par ailleurs, s'il est fait usage, par exemple conformément aux prescriptions éventuelles du fabricant du silicone, d'un primaire d'accrochage dont on enduit la paroi externe 4, préalablement au préchauffage, pour améliorer *in fine* l'accroche du silicone sur le verre, l'étape de préchauffage du récipient 1 peut également permettre de sécher ledit primaire d'accrochage, avantageusement de manière accélérée, avant de procéder au revêtement proprement dit.

Par ailleurs, la vitesse de sortie du bain de trempage du biberon 1 est de préférence contrôlée car elle constitue généralement un paramètre extrêmement important pour la qualité et l'homogénéité du revêtement 8. De manière avantageuse, cette vitesse doit de préférence être relativement élevée lors de la sortie de la moitié supérieure du biberon 1. La vitesse de sortie est ensuite préférentiellement ralentie au cours du retrait de la moitié inférieure du biberon 1, et plus particulièrement vers la fin lorsque le fond 9 du biberon 1 se rapproche de la surface du bain de trempage, afin de limiter les coulures. Un exemple de profil de vitesse adapté est notamment présenté à la figure 4.

Par une optimisation de la température de préchauffage du verre et des réglages de la machine (position du récipient 1 au moment du trempage, profil de vitesse de la montée du bain de trempage), les coulures sont supprimés et on obtient un revêtement 8 homogène, notamment en termes d'aspect visuel et tactile.

En outre, le procédé comprend, postérieurement à l'étape de trempage, une étape de chauffage dudit récipient 1, de manière à permettre la vulcanisation totale dudit silicone. Une telle vulcanisation totale garantit l'obtention des propriétés mécaniques optimales du silicone, qui induisent une bonne tenue de ce dernier sur le verre et sa répartition sous forme d'une couche d'aspect sensiblement homogène.

De préférence, l'étape de chauffage comprend deux cycles de chauffe successifs dudit récipient 1 à une température sensiblement comprise entre 200 et 400°C, de préférence sensiblement comprise entre 220 et 250°C, de préférence sensiblement égale à 243°C et 225°C respectivement. La température appliquée au récipient 1 au cours de cette étape de chauffage est également susceptible de varier selon le mode de réalisation de la présente invention, de préférence selon les mêmes critères que la température de préchauffage susvisée.

Enfin, le procédé comprend, postérieurement à l'étape de chauffage, une étape de refroidissement dudit récipient 1 à une température sensiblement comprise entre 5 et 50°C, de préférence sensiblement comprise entre 10 et 30°C. L'étape de refroidissement est préférentiellement réalisée par l'application d'un flux d'air froid sur le récipient 1, lequel passe dans une zone de circulation d'air.

Cette étape de refroidissement forcé, par exemple réalisée par soufflage d'air comprimé, lui-même à température ambiante ou préalablement réfrigéré, permet avantageusement d'accélérer le retour du récipient à une température compatible avec sa préhension, son éventuel remplissage, puis son conditionnement, ce qui permet de limiter le temps de cycle et la durée de stockage intermédiaire des récipients après qu'ils ont été revêtus de silicone.

Le procédé conforme à l'invention permet avantageusement l'obtention d'un revêtement 8 d'un seul tenant, sans coulure, sur l'ensemble de la face externe 4 du biberon 1, de manière à limiter les risques de casse de ce dernier en cas de chutes et/ou de chocs accidentels.

Par ailleurs, la demande décrit également en tant que tel un biberon en verre borosilicate ou de type I dont le corps en verre est revêtu de silicone.

Dans la suite de la description, nous nous attacherons à décrire quelques exemples d'essais réalisés à l'aide du procèdé de l'invention et du récipient 1.

### Exemple 1

Il s'agit d'un test anti-casse réalisé à partir d'un biberon 1 recouvert d'un revêtement 8 à base de silicone RHODORSIL RTV 141® conforme à ce qui précède et obtenu selon le procédé décrit ci-avant. Ce test est réalisé sur un biberon en verre de type I présentant une contenance de 158 ml.

Le biberon 1 est préchauffé en étuve à une température de préchauffage permettant l'obtention d'une température du verre sensiblement comprise entre 200 et 250°C et l'épaisseur du revêtement 8 est de l'ordre de 1 à 1,5 mm, ce qui correspond à un poids d'environ 20 g pour ce biberon de 158 ml.

Pour tester l'efficacité du revêtement 8, le biberon 1 est rempli d'eau, fermé par un bouchon en caoutchouc et serti, puis lâché d'une hauteur de 2 mètres environ sur une dalle en béton. Le même test est réalisé avec un biberon en verre nu de type I d'une contenant de 158 mi et ne comprenant pas le revêtement 8 de l'invention, le comportement de ce biberon en verre nu servant de témoin négatif au test anti-casse réalisé sur le revêtement 8 de l'invention.

Ce test permet d'évaluer simultanément la rétention du verre du biberon 1 et du liquide qu'il contient. Il s'agit d'un test particulièrement représentatif pour mesurer le potentiel anti-casse et de rétention d'un revêtement, même s'il ne permet pas une maîtrise optimale de la zone et de l'angle d'impact.

Plusieurs essais sont réalisés avec les deux biberons, l'un témoin négatif et l'autre recouvert du revêtement 8. Ces tests ont démontré que le revêtement 8 amortit bien le choc induit par la chute. En effet, lors du test de chute, le biberon 1 pourvu du revêtement 8 de silicone RHODORSIL RTV 141® est simplement fêlé alors que le biberon en verre nu explose.

Le biberon 1 revêtu est soumis à un deuxième test de chute afin d'observer la qualité de la rétention dans des conditions de casse importante. Une très bonne rétention du verre est observée, même si l'on note parfois certaines déchirures du revêtement 8 qui peuvent limiter la rétention du liquide.

Le silicone RHODORSIL RTV 141® présente de nombreux avantages, notamment vis-à-vis des contraintes liées au procédé de dépôt par trempage et permet donc de réduire les risques de casse et d'explosion du biberon 1, tout en assurant une bonne rétention des éventuels débris de verre.

### Exemple 2

Cet exemple concerne un essai de réalisation d'un revêtement 8 à partir d'un trempage dans un bain de silicose RHODORSIL RTV 141®, pour un récipient 1 conforme à ce qui précède. Cet essai a été réalisé sur une ligne de production dans des conditions se rapprochant des conditions industrielles. Les différences par rapport à une production industrielle sont les suivantes :
- Un volume de bain de trempage réduit (1 kg contre 35 kg) et non réalimenté, ce qui entraîne une baisse du niveau de remplissage au cours de l'essai et ne permet pas une régénération du bain de trempage.
- Un seul récipient 1 par rampe de trempage, qui peut classiquement contenir jusqu'à 9 récipients 1. Ceci provoque une température du verre lors du préchauffage et de la cuisson légèrement plus élevée que ce qu'elle serait pour une ligne totalement chargée de récipients 1.

Les récipients 1 de cet essai sont des flacons dont le verre est du type III. Les différentes étapes du procédé sont les suivantes :
- Chargement des flacons 1 qui sont maintenus grâce à une pince en position verticale, leur bague 6 étant dirigée vers haut,
- Passage des flacons 1 dans un four pour préchauffer le verre,
- Trempage des flacons 1 dans le bain de silicone. Les flacons 1 sont fixes mais inclinés lors de la pénétration dans le bain. Le bain monte par l'intermédiaire d'un système mécanique, ici une came dont la forme est adaptée en fonction du flacon 1 et des caractéristiques du bain,
- Retournement des flacons1 et passage de ces derniers dans un four, constitué de deux zones de chauffe, pour permettre une réticulation du silicone,
- Refroidissement des flacons 1 dans une zone de circulation d'air,
- Déchargement et emballage des flacons 1.

Pour cet essai, les conditions permettant d'obtenir des flacons 1 sans coulures sont les suivantes :
- Température de préchauffage : permettant une température du flacon d'environ 240°C,
- Température de cuisson dans la zone de chauffe 1 : 243°C,
- Température de cuisson dans la zone de chauffe 2 : 225°C,
- Temps de cycle : 22 secondes pour le trempage, et 4 à 5 minutes dans le four, pour le préchauffage d'une part, de même que pour la cuisson de réticulation post-trempage d'autre part.

L'optimisation de la température de préchauffage du verre et des réglages de la machine permet de supprimer les coulures qui pourraient éventuellement se produire lors du retournement du flacon 1.

Le recouvrement est total et sans coulures, l'épaisseur du revêtement étant de 1 à 2 mm. Par ailleurs, la température de préchauffage nécessaire étant très élevée (470°C), il est absolument indispensable de prévoir un système de refroidissement des bacs de trempage et d'alimentation pour pouvoir prolonger la durée de vie du bain.

Un test de casse a été réalisé avec deux flacons 1 fabriqués selon les étapes décrites ci-avant en comparaison avec un flacon 1 classique dépourvu de revêtement 8. Les flacons sont lâchés d'une hauteur de 2 mètres sur un sol en béton. On constate que le revêtement 8 en silicone amortit fortement le choc puisqu'il est nécessaire de faire tomber plusieurs fois (4 à 8 fois) le flacon 1 recouvert de ce revêtement 8 avant que sa paroi 4 en verre ne se casse alors que le flacon en verre nu se casse dès la première ou la deuxième chute. En outre, la rétention du verre est parfaite et aucun débris n'échappe au revêtement 8 qui assure une fonction de retenue particulièrement efficace.

### Exemple 3

Ce test consiste à mesurer et à comparer la transparence d'un récipient 1 en verre recouvert du revêtement 8 conforme à l'invention par rapport à un récipient 1 en verre nu (sans revêtement 8). Ce test est réalisé tout d'abord sur un biberon 1 en verre de type I recouvert d'un revêtement 8 en silicone RHODORSIL RTV 141® (en comparaison au même biberon 1 en verre nu), puis sur un flacon 1 en verre de type III conforme à l'exemple 2 et recouvert d'un revêtement 8 en silicone RHODORSIL RTV 141® (en comparaison au même flacon 1 en verre nu).

La « *couleur* » ou teinte du revêtement 8 en silicone RHODORSIL RTV 141® est mesurée par colorimétrie, à l'aide d'un colorimètre Datacolor International (Spectraflash SF450), On utilise pour cela le système de couleur L* a* b* qui correspond à un modèle de représentation des couleurs développé par la Commission Internationale de l'Eclairage (CIE) en 1976. La couleur est décrite à l'aide de 3 valeurs tel que cela est présenté sur le schéma de la figure 5 et selon les critères L*, a* et b* suivants :
- L* : luminance ou luminosité, qui va de 0 (noir) à 100% (blanc),
- a* : composante représentant la gamme du rouge (128) au vert (-128) en passant par le blanc (0) si la luminance vaut 100%,
- b* : composante représentant la gamme du jaune (128) au bleu (-128) en passant par le blanc (0) si la luminance vaut 100%.

La mesure est réalisée en transmission, l'illuminant utilisé est le D65 et l'angle d'observation est de 10°. On obtient les valeurs suivantes :
Pour le biberon 1 nu : L* = 89,62 a* = - 0,13; b = 0,81
Pour le biberon 1 recouvert du revêtement 8 : L* = 89,71 ; a* = - 0,16 ; b = 0,24
Pour le flacon 1 nu : L* = 91,68 a* = - 0.11; b = 0,88
Pour le flacon 1 recouvert du revêtement 8 : L* = 90,59 ; a* = 0,09 ; b = 1,71

Ces valeurs, en particulier celles du paramètre L*, permettent de conclure que le biberon 1 et le flacon 1 recouverts de silicone selon l'invention présentent une bonne transparence, proche de celle d'un biberon ou d'un flacon en verre nu. Ainsi, le revêtement 8 de l'invention n'affecte pas la transparence du biberon 1 ou du flacon 1 et permet de bien distinguer son contenu.

Ces différents tests ont permis de mettre en évidence les propriétés anti-casse et de rétention du biberon 1 ainsi que ses propriétés de transparence. Le biberon 1 est particulièrement solide et résistant aux chocs, en particulier en cas de chute sur un sol dur.

## Revendications

1. Procédé de fabrication d'un récipient (1) conçu pour contenir au moins un produit, ledit récipient (1) comprenant une paroi (2) en verre composée d'une face interne (3) conçue pour être en contact avec ledit au moins un produit et d'une face externe (4) qui lui est opposée, ledit procédé étant **caractérisé en ce qu'**il comprend une étape de recouvrement d'au moins une fraction de ladite face externe (4) par un revêtement (8) comprenant au moins un silicone et étant destiné à conférer à ladite paroi (2) en verre des propriétés de résistance à la casse, ladite étape de recouvrement comprenant une étape de trempage, ainsi que, préalablement à l'étape de trempage, une étape de préchauffage dudit récipient (1).

2. Procédé selon la revendication 1 **caractérisé en ce que**, au cours de l'étape de préchauffage, on porte le verre du récipient (1) à une température sensiblement comprise entre 200°C et 250°C. et par exemple comprise entre 200°C et 220°C.

3. Procédé selon l'une des revendications précédentes **caractérisé en ce que**, lors de l'étape de trempage, le récipient (1) préchauffé est immergé à chaud dans un bain préparé à base du silicone destiné au revêtement (8), ledit bain étant refroidi afin de prolonger sa durée de vie.

4. Procédé selon l'une des revendications précédentes **caractérisé en ce que**, lors de l'étape de trempage, le récipient (1) préchauffé est immergé à chaud dans un bain préparé à base du silicone destiné au revêtement (8), ledit bain étant refroidi de telle sorte que sa température est sensiblement maintenue en-dessous de 40°C, de 35°C, voire de 20°C, tout en étant supérieure ou égale à 10°C, et par exemple maintenue entre 10°C et 20°C, voire aux alentours de 10°C, ou entre 20°C et 35°C.

5. Procédé selon l'une des revendications précédentes **caractérisé en ce que** l'étape de trempage comprend une étape de préparation d'un bain à base du silicone, au cours de laquelle on forme un bain sensiblement liquide à partir d'un silicone bi-composant présentant une viscosité et une durée de vie en pot compatibles avec le recouvrement de ladite face externe (4) en verre.

6. Procédé selon la revendication 5 **caractérisé en ce que** l'étape de préparation du bain de silicone consiste à mélanger un premier mélange à base de polyméthylvinylsiloxane, et un deuxième mélange à base de polyméthylvinyl- et polyméthylhydrogéno-siloxanes.

7. Procédé selon la revendication 6 **caractérisé en ce que** le premier et le deuxième mélanges présentent une viscosité respectivement de 3500 et 650 mPa.s à 25°C, tandis que le bain de silicone obtenu à partir de ces mélanges présente une viscosité de l'ordre de 4000 mPa.s à 25°C et une durée de vie en pot de sensiblement 4 heures à cette même température.

8. Procédé selon l'une des revendications précédentes **caractérisé en ce que** l'étape de trempage comprend une sous-étape de pénétration dudit récipient (1) dans le bain à base de silicone, au cours de laquelle le récipient (1) est maintenu fixe en position sensiblement inclinée tandis que le bain de silicone est mis en mouvement de manière à recouvrir sensiblement toute la face externe (4) dudit récipient (1).

9. Procédé selon l'une des revendications précédente **caractérisé en ce qu'**il comprend, postérieurement à l'étape de trempage, une étape de chauffage dudit récipient (1), de manière à permettre la vulcanisation dudit silicone.

10. Procédé selon la revendication 9 **caractérisé en ce que** l'étape de chauffage comprend deux cycles de chauffe successifs dudit récipient (1) à une température sensiblement comprise entre 200 et 400°C, de préférence sensiblement comprise entre 220 et 250°C, de préférence sensiblement égale à 243°C et 225°C respectivement.

11. Procédé selon la revendication 9 ou 10 **caractérisé en ce qu'**il comprend, postérieurement à l'étape de chauffage, une étape de refroidissement forcé dudit récipient (1), par exemple par application d'un flux d'air froid, à une température sensiblement comprise entre 5 et 50°C, de préférence sensiblement comprise entre 10 et 30°C.

12. Procédé selon l'une des revendications précédentes **caractérisé en ce qu'**il constitue un procédé de fabrication d'un récipient (1) conçu pour contenir au moins un produit destiné à l'alimentation humaine ou animale, tel qu'un biberon (1) pour l'alimentation infantile.

13. Procédé selon l'une des revendications précédentes **caractérisé en ce que** le revêtement (8) présente une épaisseur sensiblement comprise entre 0.1 et 5 mm, de préférence sensiblement comprise entre 0.4 et 2 mm, avantageusement sensiblement égale à 1 mm.

## Patentansprüche

1. Verfahren zur Herstellung eines Behälters (1), der ausgestaltet ist, um mindestens ein Erzeugnis zu beinhalten, wobei der Behälter (1) eine Glaswand (2) aufweist, die aus einer Innenseite (3), die ausgestaltet ist, um mit dem mindestens einen Erzeugnis in Berührung zu sein, und aus einer ihr gegenüberliegenden Außenseite (4) besteht, wobei das Verfahren **dadurch gekennzeichnet ist, dass** es einen Schritt des Bedeckens von mindestens einem Teil der Außenseite (4) durch eine Beschichtung (8) aufweist, die mindestens ein Silikon aufweist und die dazu dient, der Glaswand (2) Eigenschaften der Bruchfestigkeit zu verleihen, wobei der Schritt des Bedeckens einen Schritt des Tauchens sowie vor dem Schritt des Tauchens einen Schritt des Vorwärmens des Behälters (1) umfasst.

2. Verfahren nach Anspruch 1, **dadurch gekennzeichnet, dass** das Glas des Behälters (1) während des Schritts des Vorwärmens auf eine Temperatur im Wesentlichen zwischen 200 °C und 250 °C und beispielsweise zwischen 200 °C und 220 °C gebracht wird.

3. Verfahren nach einem der vorhergehenden Ansprüche, **dadurch gekennzeichnet, dass** der vorgewärmte Behälter (1) bei dem Schritt des Tauchens für die Beschichtung (8) in ein Bad, das auf Silikonbasis hergestellt ist, heiß eingetaucht wird, wobei das Bad gekühlt wird, um seine Lebensdauer zu verlängern.

4. Verfahren nach einem der vorhergehenden Ansprüche, **dadurch gekennzeichnet, dass** der vorgewärmte Behälter (1) bei dem Schritt des Tauchens für die Beschichtung (8) in ein Bad, das auf Silikonbasis hergestellt ist, heiß eingetaucht wird, wobei das Bad gekühlt wird, so dass seine Temperatur im Wesentlichen unterhalb von 40 °C, 35 °C, sogar 20 °C, auf jeden Fall höher als oder gleich 10 °C gehalten wird, und beispielsweise zwischen 10 °C und 20 °C, sogar um 10 °C oder zwischen 20 °C und 35 °C gehalten wird.

5. Verfahren nach einem der vorhergehenden Ansprüche, **dadurch gekennzeichnet, dass** der Schritt des Tauchens einen Schritt der Herstellung eines Bades auf Silikonbasis umfasst, während dem ein im Wesentlichen flüssiges Bad aus einem Zweikomponenten-Silikon gebildet wird, welches eine Viskosität und eine Topfzeit aufweist, die mit dem Bedecken der Glasaußenseite (4) kompatibel sind.

6. Verfahren nach Anspruch 5, **dadurch gekennzeichnet, dass** der Schritt der Herstellung des Silikonbades darin besteht, eine erste Mischung auf der Grundlage von Polymethylvinylsiloxan und eine zweite Mischung auf der Grundlage von Polymethylvinyl- und Polymethylhydrogenosiloxan zu mischen.

7. Verfahren nach Anspruch 6, **dadurch gekennzeichnet, dass** die erste und die zweite Mischung eine Viskosität von 3500 beziehungsweise 650 mPa·s bei 25 °C aufweist, während das Silikonbad, das aus diesen Mischungen erhalten wird, eine Viskosität in einer Größenordnung von 4000 mPa·s bei 25 °C und eine Topfzeit von im Wesentlichen 4 Stunden bei dieser Temperatur aufweist.

8. Verfahren nach einem der vorhergehenden Ansprüche, **dadurch gekennzeichnet, dass** der Schritt des Tauchens einen Unterschritt des Eindringens des Behälters (1) in das Bad auf Silikonbasis umfasst, während dem der Behälter (1) in einer im Wesentlichen geneigten Position festgehalten wird, während das Silikonbad in Bewegung versetzt wird, um im Wesentlichen die gesamte Außenseite (4) des Behälters (1) zu bedecken.

9. Verfahren nach einem der vorhergehenden Ansprüche, **dadurch gekennzeichnet, dass** es nach dem Schritt des Tauchens einen Schritt des Erwärmens des Behälters (1) umfasst, um die Vulkanisierung des Silikons zu ermöglichen.

10. Verfahren nach Anspruch 9, **dadurch gekennzeichnet, dass** der Schritt des Erwärmens zwei aufeinander folgende Heizzyklen des Behälters (1) bei einer Temperatur im Wesentlichen zwischen 200 und 400 °C, vorzugsweise im Wesentlichen zwischen 220 und 250 °C, vorzugsweise gleich 243 °C beziehungsweise 225 °C, umfasst.

11. Verfahren nach Anspruch 9 oder 10, **dadurch gekennzeichnet, dass** es nach dem Schritt des Erwärmens einen Schritt der forcierten Kühlung des Behälters (1) umfasst, beispielsweise durch Aufbringen eines kalten Luftstroms, bei einer Temperatur im Wesentlichen zwischen 5 und 50 °C, vorzugsweise im Wesentlichen zwischen 10 und 30 °C.

12. Verfahren nach einem der vorhergehenden Ansprüche, **dadurch gekennzeichnet, dass** es ein Verfahren zur Herstellung eines Behälters (1) darstellt, der ausgestaltet ist, um mindestens ein Erzeugnis für die Ernährung von Menschen oder Tieren, wie zum Beispiel eine Saugflasche (1) für die Ernährung von Säuglingen, zu beinhalten.

13. Verfahren nach einem der vorhergehenden Ansprüche, **dadurch gekennzeichnet, dass** die Beschichtung (8) eine Dicke im Wesentlichen zwischen 0,1 und 5 mm, vorzugsweise im Wesentlichen zwischen 0,4 und 2 mm, vorteilhafterweise im Wesentlichen gleich 1 mm, aufweist.

## Claims

1. A method of manufacturing a container (1) designed to contain at least one product, said container (1) having a glass wall (2) made up of an inside face (3) designed to be in contact with said at least one product, and of an outside face (4) that is opposite from said inside face, said method being **characterized in that** it includes a coating step for covering at least a fraction of said outside face (4) with a coating (8) including at least a silicone and being designed to impart resistance-to-breakage properties to said glass wall (2), said coating step including a dipping step, as well as, prior to the dipping step, a step of pre-heating the container (1).

2. The method of claim 1 **characterized in that**, during the pre-heating step, the glass of the container (1) is brought to a temperature substantially lying in the range from 200°C to 250°C, and for example substantially lying in the range from 200°C to 220°C.

3. The method according to any one of the preceding claims **characterized in that**, during the dipping step, the pre-heated container 1 is hot-immersed in a bath based on the silicone that is intended for the coating (8), said bath being cooled so as to increase its lifetime.

4. The method according to any one of the preceding claims, **characterized in that**, during the dipping step, the pre-heated container 1 is hot-immersed in a bath based on the silicone that is intended for the coating (8), said bath being cooled in such a manner that its temperature is substantially maintained lower than 40°C, than 35°C, or even lower than 20°C, while being greater than or equal to 10°C, and for example maintained in the range from 10°C to 20°C, or even at about 10°C, or in the range from 20°C to 35°C.

5. The method according to any one of the preceding claims **characterized in that** the dipping step includes a step of preparing a bath based on the silicone, during which step a substantially liquid bath is formed from a bi-component silicone having a viscosity and a pot life that are compatible with coating said glass outside face (4).

6. The method according to claim 5 **characterized in that** the step of preparing the silicone bath consists in mixing a first mixture based on polymethylvinylsiloxane, and a second mixture based on polymethylvinylsiloxanes and on polymethylhydrogenosiloxanes.

7. The method according to claim 6 **characterized in that** the first and second mixtures present respective viscosities at 25°C of 3 500 mPa.s and of 650 mPa.s, while the silicone bath obtained from these mixtures presents a viscosity of about 4 000 mPa.s at 25°C and a pot life of substantially 4 hours at the same temperature.

8. The method according to any one of preceding claims **characterized in that** the dipping step includes a sub-step of causing said container (1) to penetrate into the silicone-based bath, during which sub-step the container (1) is held stationary substantially in an inclined position while the silicone bath is caused to move in such a manner as to coat substantially the entire outside face (4) of said container (1).

9. The method according to any one of preceding claims **characterized in that**, after the dipping step, the method includes a step of heating said container (1), in such a manner as to enable said silicone to be vulcanized.

10. The method according to claim 9 **characterized in that** the heating step comprises two successive heating cycles applied to said container (1) at a temperature substantially lying in the range 200°C to 400°C, preferably substantially lying in the range 220°C to 250°C, and preferably substantially equal to 243°C and 225°C respectively.

11. The method according to claim 9 or claim 10 **characterized in that**, after the heating step, the method includes a step of forced-cooling said container (1) to a temperature substantially lying in the range 5°C to 50°C, and preferably substantially lying in the range 10°C to 30°C, for example performed by applying a flow of cold air to the container (1).

12. The method according to any one of preceding claims **characterized in that** it constitutes a method of manufacturing a container (1) designed to contain at least one human or animal foodstuff, such as a baby's bottle (1) for feeding infants.

13. A container (1) according to any one of preceding claims **characterized in that** the coating (8) has a thickness lying substantially in the range 0.1 mm to 5 mm, preferably lying substantially in the range 0.4 mm to 2 mm, and advantageously substantially equal to 1 mm.
